# EUROPEAN PATENT APPLICATION

(11) **EP 3 399 349 A1**
(43) Date of publication of application: **07.11.2018**
(21) Application number: 18170558.3
(22) Date of filing: 03.05.2018
(51) Int. Cl.: G01V 1/20

(54) **GEOPHYSICAL SENSOR CABLES**

(30) Priority: 03.05.2017 US 201762500570 P; 05.05.2017 US 201762501970 P; 19.04.2018 US 201815957705
(71) Applicant: PGS Geophysical AS, 0216 Oslo (NO)
(72) Inventor: Mattsson, Anders Goran, Houston, Texas 77079 (US); Tenghamn, Stig Rune Lennart, Houston, TX Texas 77079 (US); Barr, Frederick James, Houston, TX Texas 77079 (US)
(74) Representative: Gill Jennings & Every LLP

(57) **Abstract**

At least some of the example embodiments are sensor cable sections (200) including hydrophone groups (300-306) defined along a geophysical sensor cable section, the hydrophone group (300-306) may include: a substrate (238) of flexible material having electrical traces thereon, the substrate within the internal volume (204) or embedded within the outer jacket (202), and the substrate having a length measured parallel to the longitudinal axis; and a plurality of hydrophones (236) mechanically coupled to the substrate. The substrate may have a variety of shapes, including one or more strips, helix, double helix, and cylindrical.

## Description

### BACKGROUND

Marine geophysical survey systems are used to acquire data (e.g., seismic, electromagnetic) regarding Earth formations below a body of water such as a lake or ocean. In the context of acquiring seismic data, the marine geophysical survey systems use one or more sensor streamers having a plurality of hydrophones mounted therein. However, in order to keep the streamer close to being neutrally buoyant, the number of conventional hydrophones that can be used within the sensor streamers is limited. That is, conventional hydrophones have relatively high size and weight, and the density at which conventional hydrophones can be placed in a sensor streamer is limited by the fact sensor streamers are designed to be approximately neutrally buoyant.

### BRIEF DESCRIPTION OF THE DRAWINGS

For a detailed description of example embodiments, reference will now be made to the accompanying drawings in which:
Figure 1 shows an overhead view of a marine survey system in accordance with at least some embodiments;
Figure 2A shows a perspective, partial cut away, view of a sensor cable section in accordance with example embodiments;
Figure 2B shows a magnified view of a portion of Figure 2A, in accordance with at least some embodiments;
Figure 3 shows a block diagram of a layout of hydrophone groups in accordance with at least some embodiments;
Figure 4 shows a perspective view of a substrate and hydrophones of a hydrophone group in accordance with at least some embodiments;
Figure 5 shows a perspective view of a hydrophone mounted on a substrate in accordance with at least some embodiments;
Figure 6 shows, in block diagram form, example electrical coupling of hydrophones in accordance with at least some embodiments;
Figure 7 shows a perspective view of a portion of a sensor cable section having a helically wound substrate in accordance with at least some embodiments;
Figure 8 shows a perspective view of a portion of a sensor cable section having a plurality of helically wound substrates in accordance with at least some embodiments;
Figure 9 shows a perspective view of a portion of a sensor cable section having a cylindrical substrate in accordance with at least some embodiments;
Figure 10 shows three cross-sectional views of example sensor cable sections in accordance with at least some embodiments;
Figure 11 shows a perspective, partial cutaway view of a sensor cable section 200 in accordance with at least some embodiments;
Figure 12 shows a method in accordance with at least some embodiments; and
Figure 13 shows a method of manufacturing a geophysical sensor cable in accordance with at least some embodiments.

### DEFINITIONS

Various terms are used to refer to particular system components. Different companies may refer to a component by different names - this document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection or through an indirect connection via other devices and connections.

"Cable" shall mean a flexible, axial load carrying member that also comprises electrical conductors and/or optical conductors for carrying electrical power and/or signals between components.

"Rope" shall mean a flexible, axial load carrying member that does not include electrical and/or optical conductors. Such a rope may be made from fiber, steel, other high strength material, chain, or combinations of such materials.

"Line" shall mean either a rope or a cable.

"Geophysical sensor cable section" shall mean a cable having a plurality of geophysical sensors disposed at spaced apart locations along the cable.

"Geophysical sensor cable" shall mean a plurality of geophysical sensor cable sections coupled together end-to-end.

"Flexible material" in relation to a substrate shall mean a film of polymer material with electrical traces thereon or therein, and having a minimum bend radius of one centimeter or more.

"Minimum bend radius" shall mean a measure of inside curvature that a material can withstand without kinking or damaging.

"About" in reference to a recited parameter shall mean the recited parameter +/- 10% of the recited parameter.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

Various embodiments are directed to methods and systems of marine geophysical surveying. More particularly, various embodiments are directed to methods and systems of marine seismic surveys with sensor streamers that utilize micro electromechanical systems (MEMS) hydrophones in various arrangements. More particularly still, various embodiments are directed to methods and systems where MEMS-based hydrophones mounted on substrates of flexible material are associated with sensor streamers. The specification first turns to a description of an example marine surveying system to orient the reader.

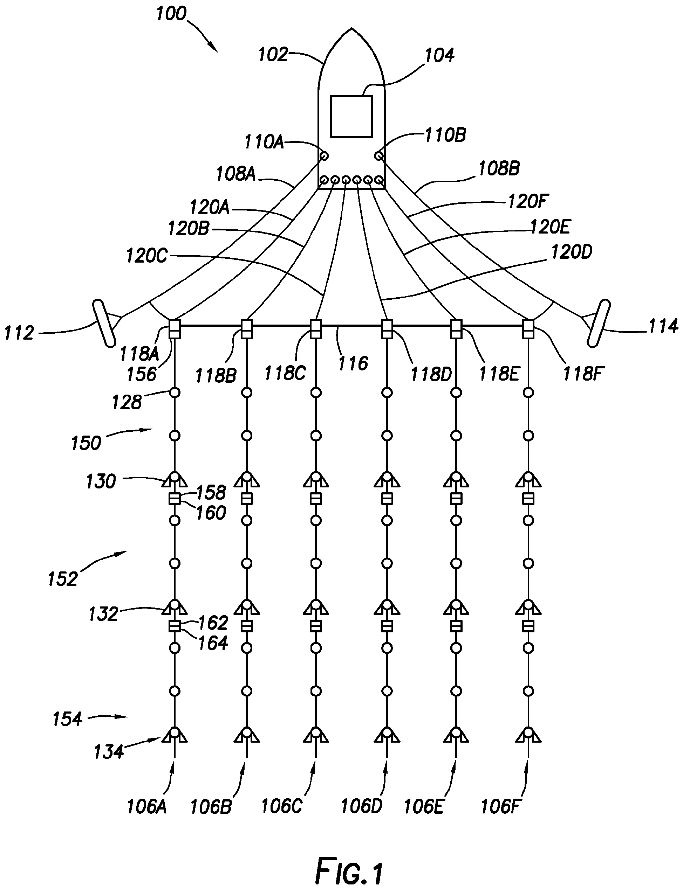

Figure 1 shows an overhead view of a marine survey system 100 in accordance with at least some embodiments. In particular, Figure 1 shows a tow or survey vessel 102 having onboard equipment, herein collectively referred to as recording system 104, such as navigation, energy source control, and a data acquisition system. Survey vessel 102 is configured to tow one or more geophysical sensor cables 106A-F through the water. In the context of towed geophysical sensor cables, the cables are hereafter referred to as "geophysical sensor streamers." While Figure 1 illustratively shows six geophysical sensor streamers, any number of geophysical sensor streamers may be used.

The geophysical sensor streamers 106A-F are each coupled, at the ends nearest the survey vessel 102 (i.e., the "proximal" or "forward" ends), to a respective lead-in cable termination 118A-F. The lead-in cable terminations 118A-F are coupled to or associated with the spreader lines 116 so as to control the lateral positions of the geophysical sensor streamers 106A-F with respect to each other and with respect to the survey vessel 102. Electrical and/or optical connections between the appropriate components in the recording system 104 and the sensors in the geophysical sensor streamers 106A-F (e.g., sensor 128 in geophysical sensor streamer 106A) may be made using inner lead-in cables 120A-F, respectively.

In order to control depth of the geophysical sensor streamers, and in some cases to control lateral spacing between the geophysical sensor streamers, the geophysical sensor streamers may be associated with a plurality of streamer positioning devices periodically spaced along the geophysical sensor streamers. Again referring to geophysical sensor streamer 106A as representative, a positioning device 130 may be coupled near the proximal end of geophysical sensor streamer 106A. In some cases, the positioning device 130 may provide only depth control, as the lateral spacing of the geophysical sensor streamer near the proximal end may be adequately controlled by the spreader lines 116. Further, representative geophysical sensor streamer 106A may be associated with positioning devices 132 and 134, shown coupled further from the proximal ends. The positioning devices 132 and 134 may provide not only depth control, but also lateral positional control. While Figure 1 shows only three positioning devices 130, 132, and 134 associated with representative geophysical sensor streamer 106A, in practice each geophysical sensor streamer may be from a few thousand meters to 10 kilometers or more in length, and have positioning devices periodically spaced along the entire length of the geophysical sensor streamer (e.g., every 20-30 meters).

Each geophysical sensor streamer 106A-F may comprise a plurality of geophysical sensor cable sections (hereafter just "sensor cable sections") coupled end-to-end to create the overall geophysical sensor streamer 106A-F. For example, and again referring to geophysical sensor streamer 106A as representative, the geophysical sensor streamer 106A may comprise a plurality of sensor cable sections 150, 152, and 154. While only three sensor cable sections are shown so as not to unduly complicate the figure, in practice each geophysical sensor streamer may be a few thousand meters to 10 kilometers or more in length, and each sensor cable section (e.g., 150, 152, and 154) may be about 75 to 100 meters in length. Thus, an overall geophysical sensor cable or streamer may be made up of one hundred or more individual sensor cable sections.

Still referring to geophysical sensor streamer 106A as representative, the proximal-most sensor cable section 150 comprises a connector 156 that couples to the inner lead-in cable 120A and spreader lines 116. Opposite the connector 156, sensor cable section 150 comprises a connector 158. Sensor cable section 152 comprises a connector 160 at the proximal end that couples to connector 158 of sensor cable section 150, and sensor cable section 152 comprises a connector 162 at a distal end of the sensor cable section 152. Sensor cable section 154 comprises a connector 164 at the proximal end that couples to connector 162 of sensor cable section 152, and sensor cable section 154 comprises a connector (not specifically shown) at a distal end of the second cable section 154, and so on. Thus, the representative geophysical sensor streamer 106A is constructed from a plurality of individual sensor cable sections (e.g., 150, 152, and 154), each of which may be about 75 to 100 meters in length.

The marine survey system of Figure 1 is a towed system; however, in other cases the sensor cable sections may be coupled together as discussed with the respect to the geophysical sensor streamers, but used as ocean-bottom cables that remain stationary during the geophysical survey. In cases where the geophysical sensor cables are stationary, the seismic source may be towed by the tow vessel above the geophysical sensor cables. The discussion below is thus equally applicable to towed systems as well as ocean-bottom geophysical sensor cables. The discussion now turns to an example sensor cable section.

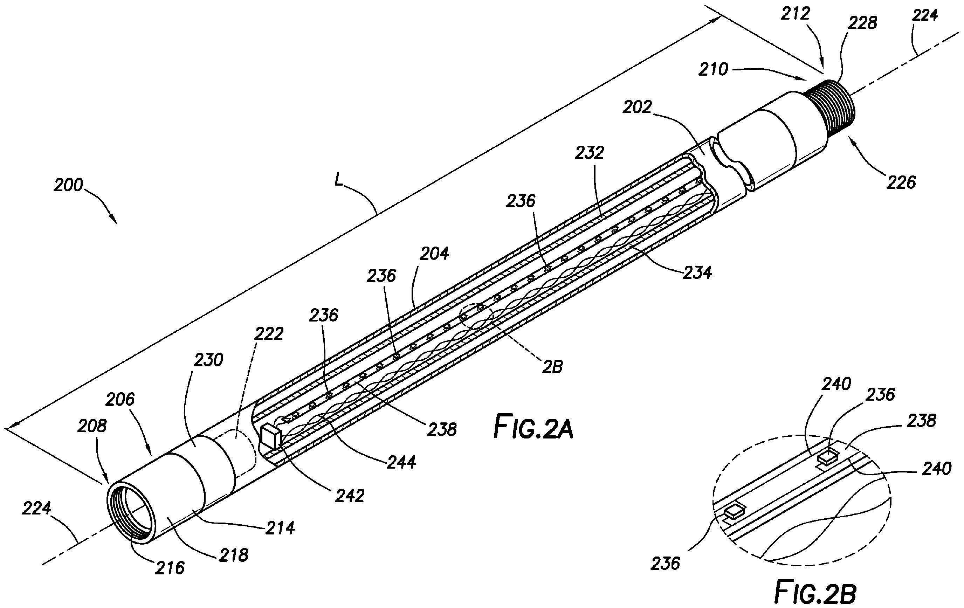

Figure 2A shows a perspective, partial cut away, view of a sensor cable section 200 in accordance with example embodiments. Figure 2B shows a magnified portion of Figure 2A. Figures 2A and 2B are referred to collectively hereafter as just Figure 2. In particular, example sensor cable section 200 is representative of any of the sensor cable sections of Figure 1 (e.g., 150, 152, 154). Example sensor cable section 200 comprises an outer jacket 202 that defines an interior volume 204, a connector 206 on the proximal end 208 (i.e., the end closest to the survey vessel 102 (not shown in Figure 2)), and a connector 210 on the distal end 212 (i.e., the end opposite the proximal end 208). Example connector 206 is a "female" connector, and thus defines a coupling ring 214 with internal threads 216, and the coupling ring 214 further defines an outside surface 218. The outer jacket 202 defines a longitudinal axis 224, and a length L. In example systems, the length L of the sensor cable section 200 is about 100 meters (m) or less, and in a specific example about 75 m, but any suitable length may be used.

The example connector 206 comprises a housing portion 230 coupled to the coupling ring 214. The housing portion 230 has an outside diameter approximately equal to the outside diameter of the outer jacket 202. The connector 206 further comprises a reduced diameter portion 222 (sometimes referred to as a "potting cup"), and the proximal end 208 of the outer jacket 202 telescopes over and seals against the reduced diameter portion 222. The coupling ring 214 is coupled to the remaining portions of the connector 206 (e.g., the housing portion 230 and reduced diameter portion 222) in such a way that the coupling ring 214 can rotate about the longitudinal axis 224 of the outer jacket 202 (which is also the central axis of the coupling ring 214) while the remaining portions of the connector 206 are stationary.

Example connector 210 is disposed at the distal end 212 opposite the connector 206. The example connector 210 defines a male connector portion 226 with external threads. The male connector portion 226 has an outside diameter and thread pitch designed and constructed to threadingly couple to a coupling ring of a connector of the next distal sensor cable section (not shown). It follows that the coupling ring 214 of connector 206 on the proximal end has an inside diameter and thread pitch designed and constructed to threadingly couple to the male connector portion of the next proximal sensor cable section (not shown). The connector 210 also defines a reduced diameter portion over which the distal end 212 of the outer jacket 202 telescopes and against which the outer jacket 202 seals, but the reduced diameter portion of connector 210 is not shown so as not to unduly complicate the figure.

In the example sensor cable section 200, tension associated with towing forces (or forces associated with deploying and retrieving the cable in an ocean-bottom context) are carried by one or more strength members in the form of ropes coupled between the connectors, and the ropes are disposed within and extend along the internal volume 204 of the outer jacket 202. The outer jacket 202 carries little (if any) of the towing force, and in some cases the outer jacket is placed into slight compression by the connectors 206/210 and the strength members. The example geophysical sensor cable section 200 comprises two strength members 232 and 234, both of which run the length of the sensor cable section 200 and mechanically couple to the connectors 206 and 210. While Figure 2 shows two strength members 232 and 234, one or more strength members may be used.

Still referring to Figure 2, the sensor cable section 200 further comprises a plurality of hydrophones 236 (not all of the hydrophones are specifically numbered) spaced along the sensor cable section 200. In particular, the example case of Figure 2 comprises a substrate 238 of flexible material to which each hydrophone 236 is directly mechanically coupled. As shown in the magnified portion of Figure 2, the substrate 238 comprises electrical traces 240 created in any suitable fashion, and the electrical traces 240 electrically couple to the plurality of the hydrophones 236. In the example shown in the magnified portion, the electrical traces 240 couple the two hydrophones 236 in parallel, but other example coupling techniques are described in greater detail below. The electrical traces 240 may be created as conductive material on the outer surface of the substrate 238 and/or may be created on embedded internal layers of the substrate 238. The substrate 238 may be constructed of any suitable material, including polymer materials such as polyimide (PI), polyether ether ketone (PEEK), polyester (PET), polyethylene naphthalate (PEN), polyetherimide (PEI), along with various fluropolymers (FEP). The substrate 238 may be alternatively referred to as flexible printed circuits or flexible flat cables.

The example sensor cable section 200 further comprises an electrical circuit 242 disposed within the internal volume 204 of the outer jacket 202. The electrical circuit 242 electrically couples to the hydrophones 236, and communicatively couples to a communication channel 244. The electrical circuit 242 is configured to sense voltage signals produced by the hydrophones responsive to seismic energy propagating past the sensor cable section 200. The electrical circuit 242 may then amplify (if needed) the signals, perform analog-to-digital conversion, and communicate the data to the recording system 104 (Figure 1) along the communication channel 244. Communication channel 244 extends within the internal volume 204 of the outer jacket 202. Inasmuch as the sensor cable section 200 is a component of a much longer sensor streamer 106 (Figure 1), the communication channel 244 may extend between the connectors 206 and 210 and be communicatively coupled to communication channels of the proximal and distal contiguous sensor cable sections (not shown in Figure 2). The communication channel 244 may take any suitable form, such as one or more twisted pair cables, and/or one or more optical conductors. The specification now turns to conceptual organization of the hydrophones and electrical circuits of the sensor cable section, with the conceptual organization having at least some manifestations in the physical layout of the sensor cable section 200.

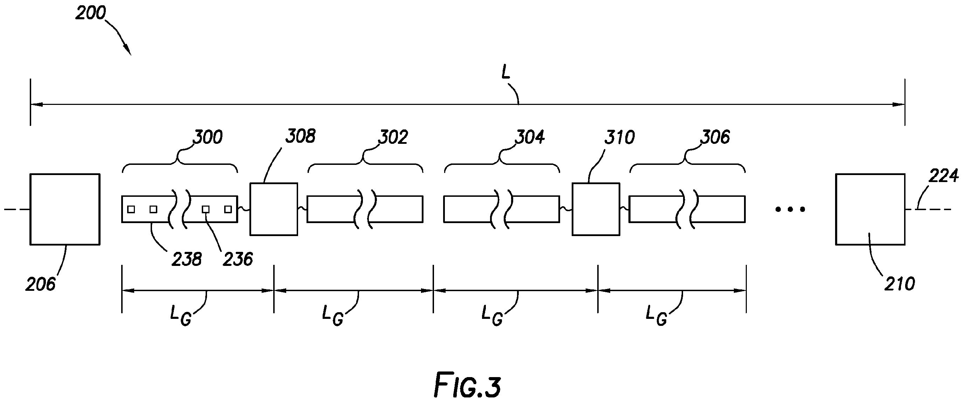

Figure 3 shows a block diagram of a layout of hydrophone groups in accordance with at least some embodiments. In particular, shown in Figure 3 are portions of the sensor cable section 200 for context, including connector 206 and connector 210, but the outer jacket is omitted for clarity. As stated above, an example sensor cable section 200 may have a length L of about 100 m, and in specific example cases a length L of about 75 m. The sensor cable section 200 has hydrophones spaced along the length L, and for purposes of recording seismic energy and transmitting indications of the seismic energy to the recording system 104 (Figure 1), the hydrophones are divided into hydrophone channels or hydrophone groups contiguously defined along the sensor cable section 200. For example, the sensor cable section 200 comprises a first hydrophone group 300 having a substrate 238 with hydrophones 236 mechanically and electrically coupled thereto. The sensor cable section 200 further comprises a second hydrophone group 302, a third hydrophone group 304, a fourth hydrophone group 306, and so on, with hydrophone groups contiguously defined along the sensor cable section 200.

In some cases, electrical circuits are dedicated to each hydrophone group, but in other cases a single electrical circuit may be associated with the two or more hydrophone groups. For example, electrical circuit 308 may be electrically coupled to the hydrophone group 300 and hydrophone group 302, and thus electrical circuit 308 is configured to read voltages produced by hydrophones of each hydrophone group and configured to communicate indications of the voltages along the communication channel 244 (not shown in Figure 3). Similarly, electrical circuit 310 may be electrically coupled to the hydrophone group 304 and hydrophone group 306, and thus electrical circuit 310 is configured to read voltages produced by hydrophones of each hydrophone group and configured to communicate indications of the voltages along the communication channel 244 (not shown in Figure 3). While Figure 3 shows the example electrical circuits 308 and 310 disposed physically between their respective hydrophone groups, such is merely for convenience of the discussion, and the electrical circuits 308 and 310 (and others along the sensor cable section 200) may be placed at any suitable location.

Each hydrophone group spans a length L_{G} measured along the longitudinal axis 224. In order to simplify later seismic analysis, in example systems the length L_{G} of each hydrophone group is the same, though having the hydrophone groups span the same length L_{G} is not strictly required. The length L_{G} of the hydrophone groups may take any suitable length. In a specific example system, for a sensor cable section having a length L of 75 m, each hydrophone group may have a length L_{G} of 3.125 m, and thus 24 hydrophone groups would be defined along the sensor cable section 200. Other numbers of hydrophone groups and thus lengths L_{G} of the hydrophone groups may be used, such as: 12 hydrophone groups with each hydrophone group spanning 6.25 m of a 75 m sensor cable section 200; or 6 hydrophone groups with each hydrophone group spanning 12.5 m of a 75 m sensor cable section 200. The specification now turns to a discussion of spacing or density of the hydrophones within a hydrophone group.

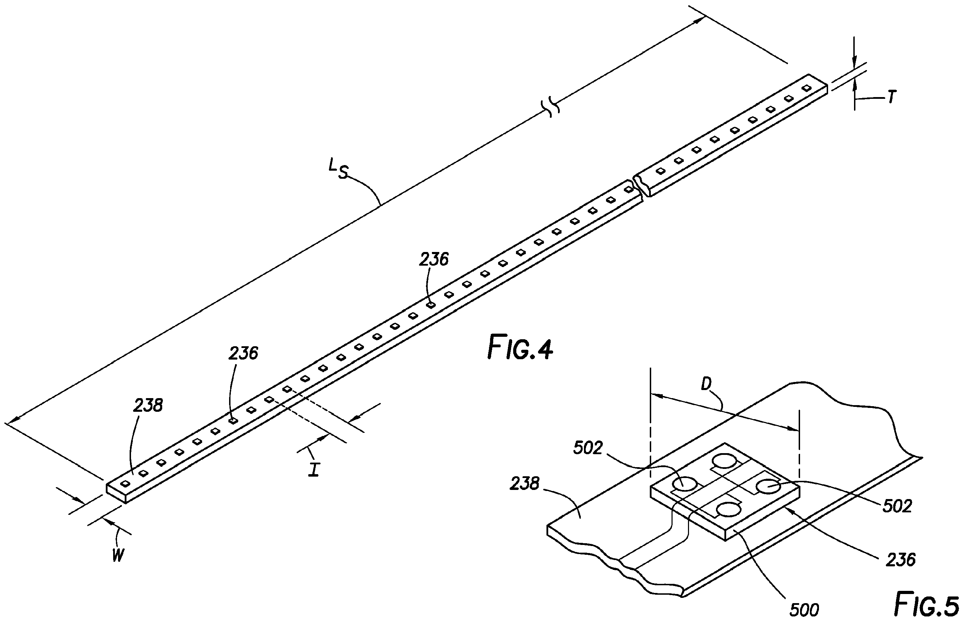

Figure 4 shows a perspective view of a substrate and hydrophones of a hydrophone group in accordance with at least some embodiments. In particular, Figure 4 shows the substrate 238 as a strip of flexible material having a length L_{S}, a width W, and a thickness T. In cases where the substrate 238 in the form of a strip of flexible material has its length L_{S} running parallel to or coaxial with the longitudinal axis 224 (Figure 2), the length L_{S} of the substrate 238 may likewise be the length L_{G} of the hydrophone group (e.g., L_{G} being about 3.125 m in example embodiments). Other cases regarding the relationship of the length L_{S} of the substrate and length L_{G} of the hydrophone group (e.g., helical substrates) are discussed below. In cases where the substrate 238 is a strip of flexible material, and as shown the width W may be on the order of a few millimeters, e.g., a few millimeters wider than the largest dimension of the hydrophones 236 (discussed more below), to several centimeters. The thickness T may be a few millimeters. The hydrophones 236 in the example embodiments are equally and periodically spaced along the length L_{S} of the substrate 238. In accordance with at least some embodiments, the hydrophones 236 define a density of greater than one hydrophone per meter measured along the length L_{S} of the substrate 238 (and in these embodiments along the longitudinal axis 224). In some cases, the density is 10 hydrophones per meter or greater, and in other cases the density is 100 hydrophones per meter or greater. Stated slightly differently, the hydrophones 236 are periodically spaced along the substrate 238 at intervals I. In some cases the interval I is 50 centimeters (cm), in other cases the interval I is 10 cm, and in yet still other cases the interval I is 1 cm.

Figure 5 shows a perspective view of a hydrophone mounted on a substrate in accordance with at least some embodiments. In particular, Figure 5 shows the hydrophone 236 directly mechanically coupled to substrate 238, and also hydrophone 236 is electrically coupled to traces of the substrate 238. In accordance with example embodiments, each hydrophone comprises a die 500 of an integrated circuit. That is, hydrophones in accordance with example embodiments are monolithically created on semiconductor wafers (e.g., silicon wafers), and the dies 500 are created by scribing or cutting the semiconductor wafers. U.S. Publication No. 2014/0230557 titled "Sensor with vacuum-sealed cavity" (hereby incorporated by reference as if reproduced in full below) describes example MEMS-based hydrophones used in example embodiments. In some cases each hydrophone 236 comprises a plurality of hydrophone elements 502. The example hydrophone 236 of Figure 5 shows four hydrophone elements 502 in a square array; however, any number of hydrophone elements may be used in any suitable configuration. For example, hydrophones 236 may include 10x10 arrays (i.e., 100 hydrophone elements), or a 5x5 array (i.e., 25 hydrophone elements), or 3x3 arrays (i.e., nine hydrophone elements). Moreover, the arrangement need not be a square array, and other suitable arrangements are possible, such as rectangular arrays, circular arrays, and spirals arrays.

Moreover, the size of the hydrophone 236 is small compared to conventional hydrophones, which conventional hydrophones may be on the order of three centimeters or more in largest dimension. Combined with the packaging, conventional hydrophones are relatively heavy as well, which limits how many conventional hydrophones can be included in a sensor streamer and still keep the streamer approximately neutrally buoyant. By contrast, hydrophones 236 in the example embodiments may have a largest dimension D of 20 millimeters or less, in some cases 10 millimeters or less, and in other cases 5 millimeters or less. Moreover, being monolithically created devices the hydrophones 236 are less dense than conventional hydrophones, even including the substrate(s) 238 to which they are mounted. Thus, using MEMS-based hydrophones enables use of significantly greater numbers of hydrophones 236 in a sensor cable section 200 (Figure 2) without adversely affecting buoyancy of the sensor cable section, which thus enables smaller hydrophone groups than conventional sensor streamers.

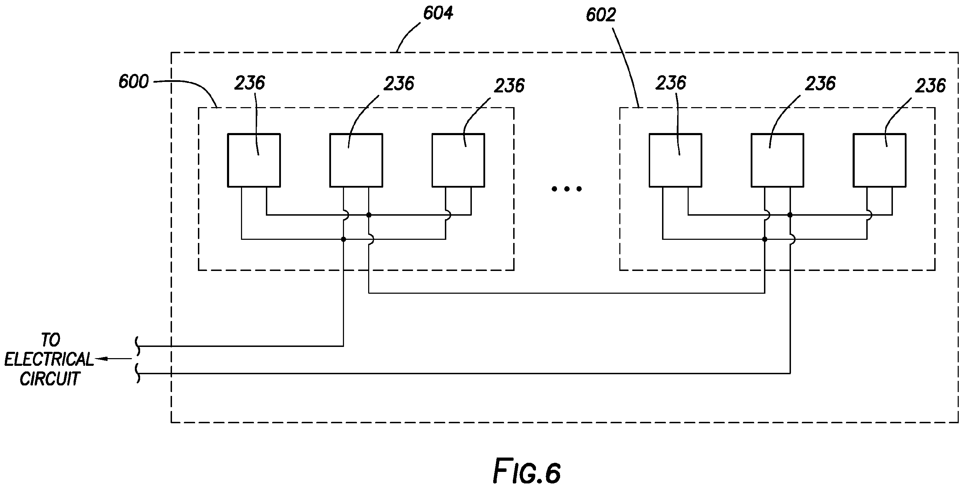

In order to have sufficient current sourcing capability, the individual hydrophone elements 502 in example embodiments are coupled in parallel as shown in Figure 5. However, coupling between the hydrophones 236 of a hydrophone group may be in series and/or in parallel depending on the capabilities of the hydrophones 236 and the amplifiers in the electrical circuits 242, 308, and/or 310. Figure 6 shows, in block diagram form, example electrical coupling of hydrophones 236 in accordance with at least some embodiments. In particular, Figure 6 shows six example hydrophones 236 of a single hydrophone group. The example system shows a first parallel group 600 illustratively comprising three hydrophones 236 electrically coupled in parallel, but two or more hydrophones 236 could be included in parallel group 600. The example system further shows a second parallel group 602 illustratively comprising three hydrophones 236 electrically coupled in parallel, but again two or more hydrophones 236 could be included in parallel group 600. The two example parallel groups 600 and 602 are electrically coupled in series to create series group 604. The example groups 600, 602, and 604 are electrically coupled to the electrical circuit 242 associated with the hydrophone group. It is noted that some or all the electrical interconnection in series and/or in parallel may be implemented by way of electrical traces on substrate 238. Moreover, Figure 6 shows a specific parallel/series connection scheme, but it will be understood that any combination of parallel and series connections of the hydrophones 236 may be used (notwithstanding the parallel connection of the individual hydrophone elements 502 on the die 500 of each hydrophone).

Returning briefly to Figure 2, the embodiments discussed to this point have assumed the hydrophones 236 mechanically and electrically coupled to a substrate 238 being a strip of material within the internal volume 204 of the outer jacket 202, and with the length L_{S} of the substrate that extends parallel to the longitudinal axis 224. In some cases the length L_{S} is coaxial with the longitudinal axis 224 such that the length L_{S} of the substrate also defines the length L_{G} of the hydrophone group. However, other arrangements are possible, and the specification now turns to example other arrangements.

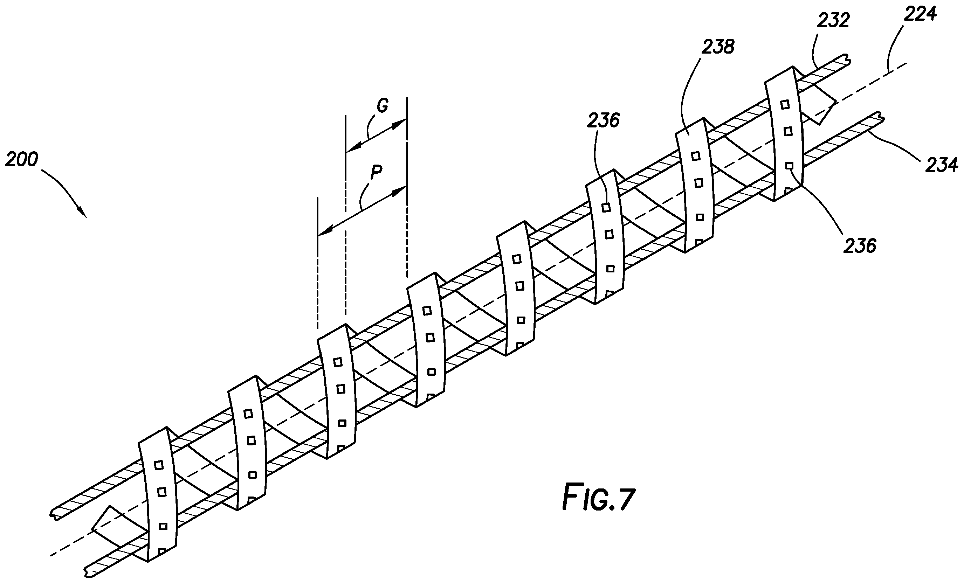

Figure 7 shows a perspective view of a portion of a sensor cable section having a helically wound substrate in accordance with at least some embodiments. In particular, Figure 7 shows substrate 238 helically wound such that the length of the substrate forms a helix around the longitudinal axis 224. Spaced along the substrate 238 is the plurality of hydrophones 236 as discussed above. In the example system of Figure 7, the helix formed by the substrate 238 has a central axis that is coaxial with the longitudinal axis 224 of the sensor cable section 200, but such is not strictly required, and thus in other cases the central axis of the helix formed by the substrate 238 may be parallel to the longitudinal axis 224. Moreover, Figure 7 shows the hydrophones 236 on the outside surface of the substrate 238, but in other systems the hydrophones may be disposed on the inside surface. The helix formed by the substrate 238 has a pitch distance P between two corresponding locations on the substrate 238 (as shown and consistent with Figure 2, the corresponding locations being the proximal edges at the same radial location along the longitudinal axis 224). Given than the substrate has a width (not specifically delineated on Figure 7), the pitch distance P may define a gap distance G being the pitch distance P less the width of the substrate 238. Any suitable pitch distance P may be used including a pitch distance P equal to the width W such that the substrate 238 effectively forms a cylinder by having trailing edges of the strip abutting leadings edges of the strip (again considered along the longitudinal axis 224 at a consistent radial location).

The system of Figure 7 using the helically wound substrate may differ functionally from the substrate of Figure 2 in several respects. For example, even though the MEMS-based hydrophones 236 are relatively small, their size is non-zero. Mechanical and electrical coupling of the hydrophones 236 to the underlying substrate may be based on having sufficient spacing along the length L_{S} of the substrate 238 between the hydrophones to enable mechanical bonding of the die 500 to the substrate and/or wire bonding such that the die 500 is electrically coupled to the traces of the substrate 238. The space used for construction may thus limit the density of the hydrophones when considered along the length L_{S} of the substrate. By contrast, by forming substrate 238 into the shape of a helix, while the hydrophones may use relatively large spacing along the length L_{S} of the substrate 238 to ease construction and/or decrease the minimum bend radius of the substrate 238, the density considered along the longitudinal axis 224 (or considered along the length L_{G} of the hydrophone group) will be greater than the density considered along the length L_{S} of a substrate 238. Moreover, compared to the versions of Figure 2, the hydrophones 236 (in some cases all residing in the same hydrophone group) of Figure 7 represent a three-dimensional helical array of locations at which passing seismic energy can be detected and flow and other noise can be detected. Finally with respect to Figure 7, the substrate 238 is shown to encompass or circumscribe the example strength members 232 and 234; however, in other cases the helix formed by the substrate may have a diameter small enough to reside between the strength members 232 and 234.

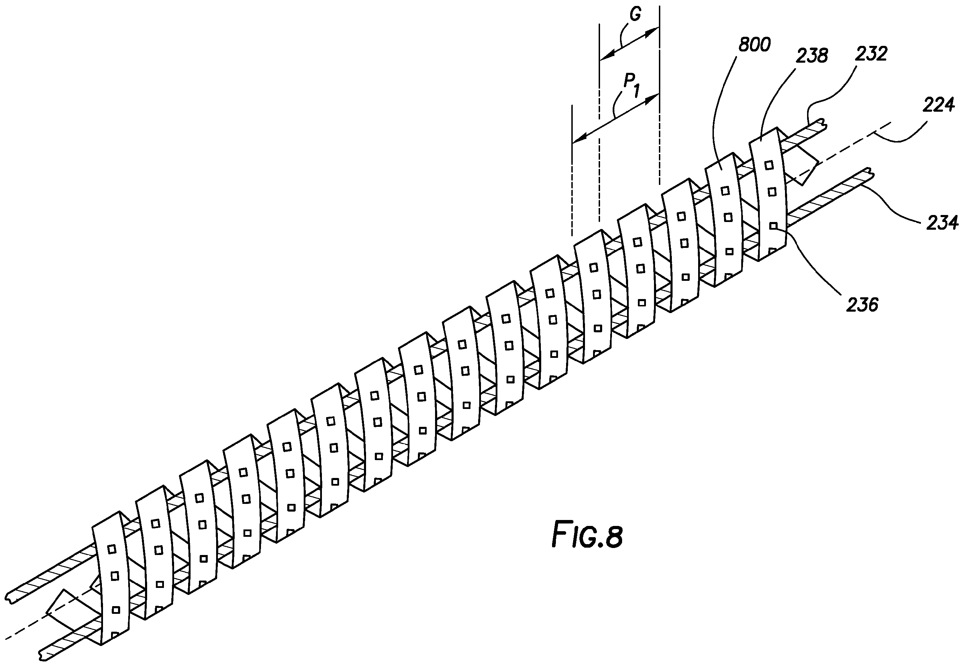

Figure 8 shows a perspective view of a portion of a sensor cable section having a plurality of helically wound substrates in accordance with at least some embodiments. In particular, Figure 8 shows substrate 238 helically wound such that the length of the substrate forms a helix around the longitudinal axis 224. Spaced along the substrate 238 is the plurality of hydrophones 236 as discussed above. Also shown in Figure 8 is a second substrate 800 helically wound such that the length of the substrate 800 also forms a helix around the longitudinal axis 224, and thus the helix formed by substrate 800 is coaxial with the helix formed by substrate 238. Spaced along the substrate 800 is a plurality of hydrophones 236. While both substrates 238 and 800 in the helical form have a central axis that is coaxial with the longitudinal axis 224 of the sensor cable section 200, such is not strictly required, and thus in other cases the central axis of the helices formed by the substrates 238 and 800 may be parallel to each other and parallel the longitudinal axis 224. Moreover, Figure 7 shows the hydrophones 236 on the outside surfaces of the substrates 238 and 800, but in other systems the hydrophones may be disposed on the inside surface. The helix defined by the substrate 238 has a pitch distance P₁ between two corresponding locations on the substrate 238. Given that the substrate has a width (not specifically delineated on Figure 8), the pitch distance P₁ thus defines a gap distance G being the pitch distance P₁ less the width of the substrate 238. Given that the second substrate 800 is disposed within the gap, any suitable pitch distance P₁ may be used including a pitch distance P₁ equal to the twice the width W such that the substrates 238 and 800 effectively form a cylinder. While Figure 8 shows two substrates 238 and 800 helically wound together to form a double helix, two or more substrates may be helically wound together. Moreover, given the overlap of the two substrates, it is contemplated that the two or more substrates helically wound together will nevertheless reside fully or partially in the same hydrophone group (e.g., electrically connected in parallel). Finally with respect to Figure 8, the substrates 238 and 800 are shown to encompass or circumscribe the example strength members 232 and 234; however, in other cases the helices formed by the substrates may have a diameter small enough to reside between the strength members 232 and 234.

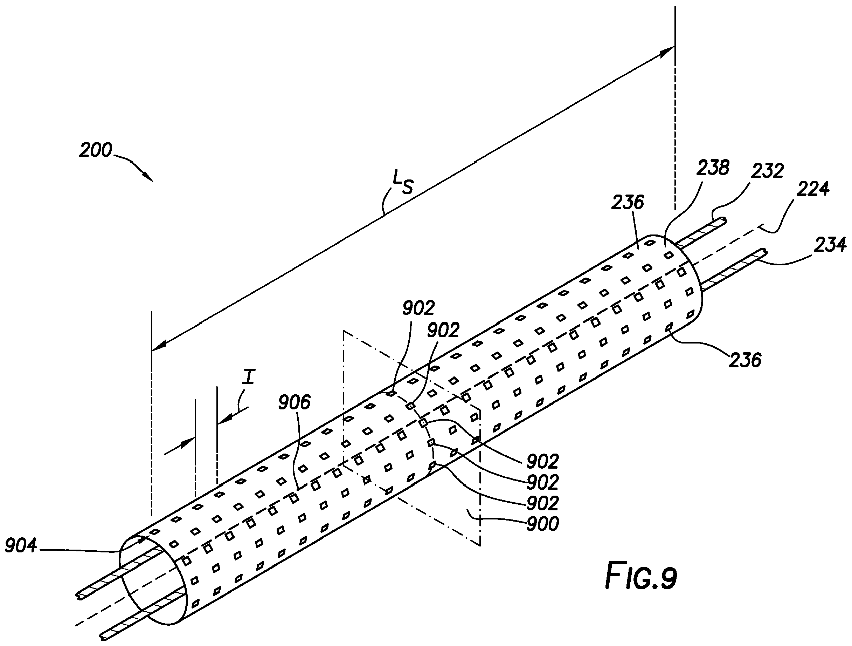

Figure 9 shows a perspective view of a portion of a sensor cable section 200 having a cylindrical substrate 238 in accordance with at least some embodiments. In particular, Figure 9 shows substrate 238 in the form a right circular cylinder. Spaced along the substrate 238 is the plurality of hydrophones 236 that in this case define a grid pattern on the cylinder. In the example system of Figure 9, the cylindrical form of the substrate 238 has a central axis that is coaxial with the longitudinal axis 224 of the sensor cable section 200, but such is not strictly required, and thus in other cases the central axis of the cylinder formed by the substrate 238 may be parallel to the longitudinal axis 224. Moreover, Figure 9 shows the hydrophones 236 on the outside surface of the substrate 238, but in other systems the hydrophones may be disposed on the inside surface, or the inside surface and the outside surface. The grid pattern of the hydrophones 236 has at least two conceptual components from a layout perspective. First, at a particular axial location along the longitudinal axis 224, there may be 10 to 20 hydrophones inclusive at the location. For example, the view of Figure 9 illustrates an axial location by way of a plane 900 drawn perpendicular to the longitudinal axis 224. A plurality of hydrophones 902 are radially spaced around the cylindrical substrate 238 at the axial location of the plane 900. Stated slightly differently, the hydrophones 902 reside in the plane 900 and define a circular pattern within the plane 900. Though only five hydrophones 902 are visible in the view of Figure 9, again at each axial location there may be between 10 and 20 hydrophones, inclusive. Hydrophones 902 do not necessarily differ from hydrophones 236, but are separately numbered to more easily visualize the radial location aspects.

A second conceptual component of the layout of the hydrophones 236/902 is the axial placement. Consider, for example, all the hydrophones at a single radial alignment 904 along the length L_{S} of the substrate 238. Along the single radial alignment (e.g., 904), in example systems the density is 10 hydrophones per meter or greater, and in other cases the density is 100 hydrophones per meter or greater. Stated slightly differently, along the single radial alignment (e.g., 904) the hydrophones 236 are periodically spaced along the substrate 238 at intervals I. In some cases the interval I is 50 centimeters (cm), in other cases the interval I is 10 cm, and in yet still other cases the interval I is 1 cm. Of course, the example density and spacing may be equally applicable to the other radial alignments (though those alignments are not specifically marked).

In some cases the substrate 238 of Figure 9 may be a solid cylinder of flexible material constructed of the same materials as discussed with respect to the substrate of Figure 2. In other cases, however, the substrate 238 may be initially created as a rectangular member having length L_{S} and width being the circumference of the cylindrical shape, and the cylindrical shape is thus formed by abutting two edges defined along the length L_{S}, the abutting edges shown by dashed line 906 in the Figure 9. Finally with respect to Figure 9, the substrate 238 is shown to encompass or circumscribe the example strength members 232 and 234; however, in other cases the cylinder formed by the substrate may have a diameter small enough to reside between the strength members 232 and 234.

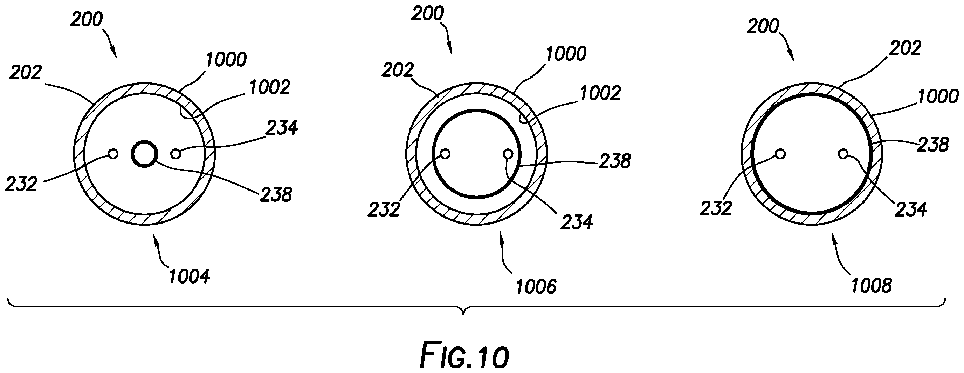

The various embodiments discussed to this point are expressly or impliedly directed to situations where the substrate(s) 238 resides within the internal volume 204 of the outer jacket 202. In the case of Figure 2, the substrate 238 is illustratively shown centered in the outer jacket 202. The substrates discussed in Figures 7-9 may likewise reside within the outer jacket 202. Figure 10 shows three cross-sectional views of example sensor cable sections in accordance with at least some embodiments. In particular, each cross-section shows the outer jacket 202, and the outer jacket 202 of each cross-section defines an outside diameter 1000 as well as an inside diameter 1002. In the view 1004, the substrate 238 is centered within the outer jacket 202 between the strength members 232 and 234. The substrate 238 in view 1004 could be any of the configurations of Figures 7-9.

In the view 1006, the substrate 238 is centered within the outer jacket 202, but in this case outside the strength members 232 and 234. Stated slightly differently, the substrate 238 of the view 1008 resides between the inside diameter 1002 of the outer jacket 202 and the strength members 232 and 234. Again, the substrate 238 in view 1006 could be any of the configurations of Figures 7-9.

Still referring to Figure 10, in the view 1008 the substrate 238 is centered within the outer jacket 202 and resides outside the strength members 232 and 234. However, the substrate 238 in the view 1008 abuts the inside diameter 1002 of the outer jacket 202. In some cases implemented as in the view 1008, the substrate 238 abuts the inside diameter 1002 of the outer jacket 202 by virtue of a spring force of the substrate itself tending to open the substrate (cylindrical versions), or by virtue of a spring force of the substrate itself tending to unwind the substrate (helical versions). In other embodiments, the substrate 238 may be adhered to the inside diameter 1002 of the outer jacket 202 such that the abutting relationship of the substrate 238 is held in place by an adhesive. Again, the substrate 238 in view 1006 could be any of the configurations of Figures 7-9.

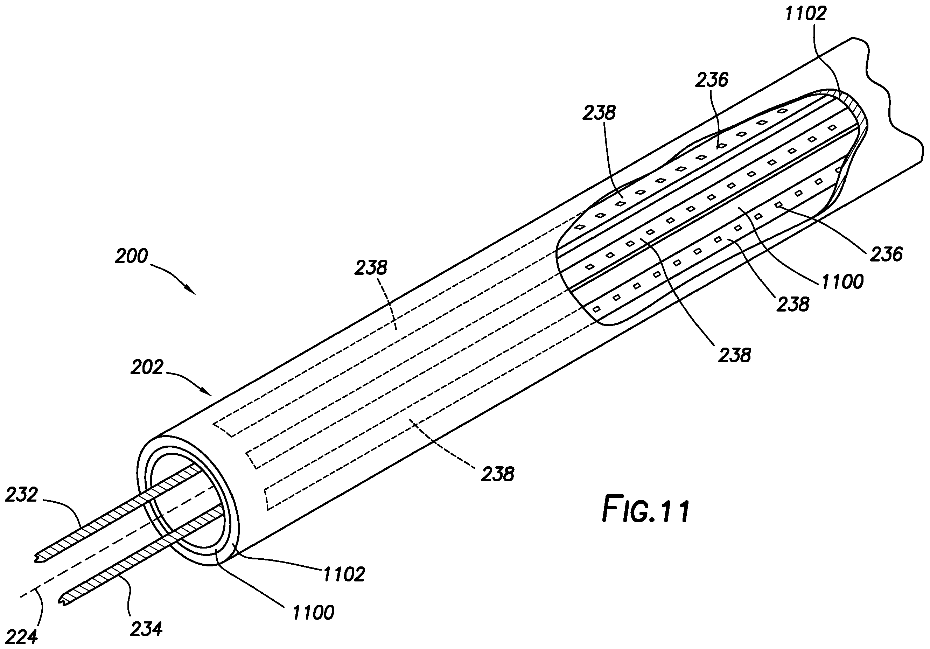

The various embodiments discussed to this point are expressly or impliedly directed to situations where the substrate(s) 238 resides within the internal volume 204 of the outer jacket 202, with the substrates free-floating within the fill material of the internal volume 204 (e.g., the fill material being a gel or closed-cell foam). However, in other cases the substrate(s) 238 may be embedded within the outer jacket 202. Figure 11 shows a perspective, partial cutaway view of a sensor cable section 200 in accordance with at least some embodiments. In particular, visible in Figure 11 is a portion of the outer jacket 202 along with example strength members 232 and 234. The outer jacket 202 in Figure 11 may be conceptually divided into an inner portion 1100 and an outer portion 1102. The inside diameter of the inner portion 1100 forms the inside diameter of the overall outer jacket 202. Likewise the outside diameter of the outer portion 1102 forms the outside diameter of the overall outer jacket 202. To the extent that the inside portion 1100 and the outside portion 1102 are distinct members (discussed more below), the outside diameter of the inner portion 1100 abuts in the inside diameter of the outer portion 1102.

In the example embodiments of Figure 11, embedded within the outer jacket 202 are one or more substrates 238 including the hydrophones 236 mechanically and electrically coupled to the substrates 238. In the example shown in Figure 11, the substrates 238 reside at the interface between the inner portion 1100 and the outer portion 1102, and the substrates are visible in the partial cut away of the outer portion 1102. In the example case of Figure 11, each substrate is a strip of flexible material that has a length and width, and the length of each substrate extends parallel to the longitudinal axis 224. While Figure 11 shows the substrates as parallel strips, any of the example substrates of Figures 7-9 could be embedded in the outer jacket 202 as shown in Figure 11.

Still referring to Figure 11, in some cases the inner portion 1100 and outer portion 1102 comprise two distinct elements coupled together. For example, the substrate(s) may be attached to the outside diameter of the inner portion 1100 in any suitable form (e.g., by way of an adhesive), and then the outer portion 1102 may be telescoped over the combined inner portion 1100 and substrate(s) 238 (e.g., the outer portion 1102 may be a heat-shrinkable member, and thus once in place the outer portion 1102 contracted to abut the inner components). In other cases, the outer portion 1102 may be a coating applied after the substrate(s) 238 is coupled to the inner portion 1100 (e.g., spray coating, or applied by submerging the sensor cable section 200 in a liquid that coats and thus becomes the outer portion 1102). Any suitable method for installing and/or creating the outer portion 1102 may be used.

In yet still other cases, the distinction between the inner portion 1100 and the outer portion 1102 is merely conceptual. For example, the outer jacket 202 may be a single element that is extruded with the substrate(s) 238 embedded during the extrusion process. As an alternative, the outer jacket 202 may be injection molded, again with the substrate(s) 238 placed within the mold prior to injection and thus integrally formed within the outer jacket 202 as part of the injection molding process. Any suitable method or mechanism to embed the substrate(s) 238 in the outer jacket 202 may be used. For example sensor cable sections intended to be components of a sensor streamer, the outer jacket 202 may have an outside diameter of 10 cm or less, and in some case about 6 cm; however, sensor cable sections 200 (and thus sensor streamers and/or ocean bottom cables) may be suitable size.

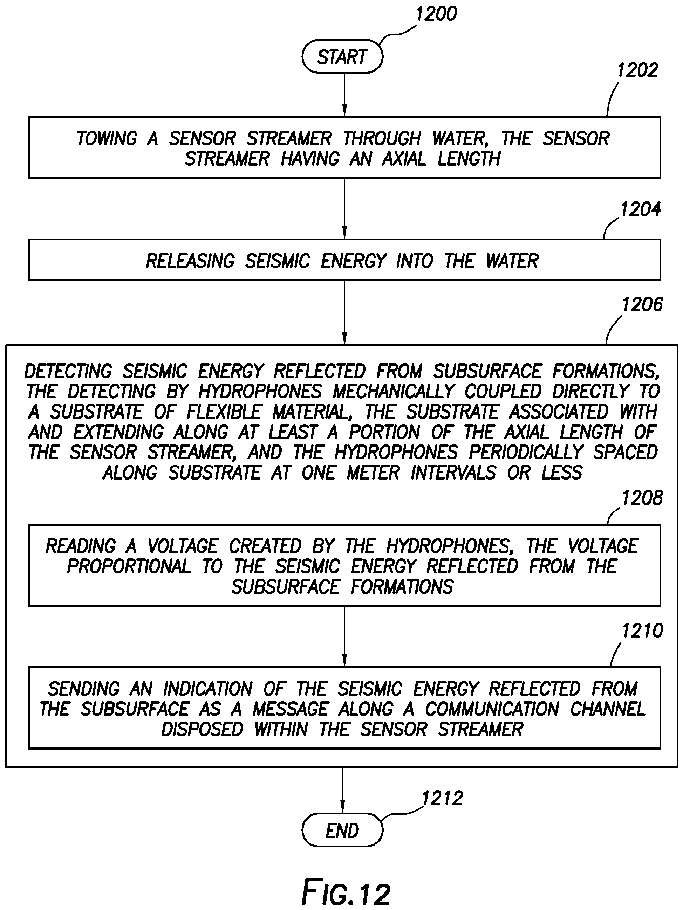

Figure 12 shows a method in accordance with at least some embodiments. In particular, the method starts (block 1200) and comprises: towing a sensor streamer through water, the sensor streamer defining an axial length (block 1202); releasing seismic energy into the water (block 1204); and detecting seismic energy reflected from subsurface formations, the detecting by hydrophones mechanically coupled directly to a substrate of flexible material, the substrate associated with and extending along at least a portion of the axial length of the sensor streamer, and the hydrophones periodically spaced along substrate at one meter intervals or less (block 1206). The detecting seismic energy may include: reading a voltage created by the hydrophones, the voltage proportional to the seismic energy reflected from the subsurface formations (block 1208); and sending an indication of the seismic energy reflected from the subsurface as a message along a communication channel disposed within the sensor streamer (block 1210). Thereafter the method ends (block 1212).

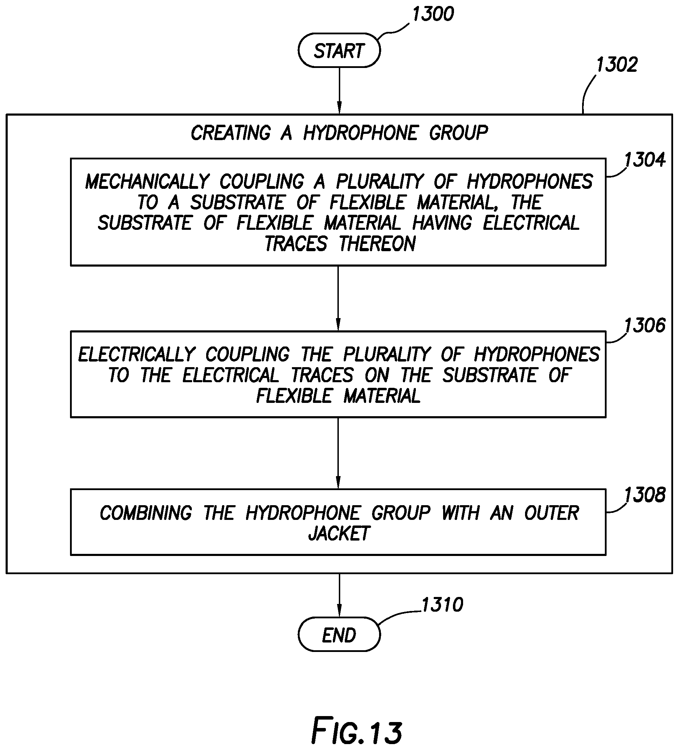

Figure 13 shows a method of manufacturing a geophysical sensor cable in accordance with at least some embodiments. In particular, the method starts (block 1300) and comprises creating a hydrophone group (block 1302). Creating the hydrophone group may comprise: mechanically coupling a plurality hydrophones to a substrate of flexible material, the substrate of flexible material having electrical traces thereon (block 1304); and electrically coupling the plurality of hydrophones to the electrical traces of the on the substrate of flexible material (block 1306). Thereafter, the hydrophone group is combined with an outer jacket (block 1308). Thereafter the method ends (block 1310).

As discussed above, created the hydrophone group may take many forms. In some cases the substrate of flexible material is a long strip of material with the hydrophones both mechanically and electrically coupled thereto. Combining the hydrophone group comprising the substrate of flexible material with the outer jacket likewise may take many forms. For example, the substrate of flexible material may be placed within the internal volume of the outer jacket such that the length of the substrate of flexible material is parallel to the longitudinal axis of the outer jacket. In other cases, the substrate of flexible material may be formed into a helix within the internal volume of the outer jacket, and in some cases the helix winds around the longitudinal axis. Multiple substrates may be placed in helix form in the internal volume. In yet still other example, the substrate of flexible material may be embedded within the outer jacket such that the length of the substrate of flexible material is parallel to the longitudinal axis of the outer jacket. In other cases, the substrate of flexible material may be formed into a helix and embedded within the outer jacket. Multiple substrates of flexible material may be placed in helix form and embedded in the outer jacket.

In summary, we provide:
1. A geophysical sensor cable section comprising:
   an outer jacket that defines an internal volume, a longitudinal axis, and a length;
   a hydrophone group defined along the geophysical sensor cable section, the hydrophone group comprising:
      a substrate of flexible material having electrical traces thereon; and
      a plurality of hydrophones mechanically coupled to the substrate, each hydrophone comprising a die of an integrated circuit, and the electrical traces electrically coupling to the plurality of hydrophones.
2. The geophysical sensor cable section of clause 1 further comprising the plurality of hydrophones having a density of one hydrophone per meter or greater, the density measured along a length of the substrate measured parallel to the longitudinal axis.
3. The geophysical sensor cable section of clause 2 wherein the density of the hydrophones is at least one selected from a group consisting of: 10 hydrophones per meter or greater; and 100 hydrophones per meter or greater.
4. The geophysical sensor cable section of clause 1 wherein each hydrophone further comprises a plurality of hydrophone elements electrically coupled in parallel.
5. The geophysical sensor cable section of clause 1 wherein at least some of the plurality of hydrophones are electrically coupled in series.
6. The geophysical sensor cable section of clause 1 wherein each hydrophone further comprises a plurality of hydrophone elements electrically coupled in parallel, and at least some of the plurality of hydrophones electrically coupled in series.
7. The geophysical sensor cable section of clause 1 wherein the die of each hydrophone has a largest dimension being at least one selected from the group comprising: 10 millimeters or less; and 5 millimeter or less.
8. The geophysical sensor cable section of clause 1 further comprising a gel within the internal volume of the outer jacket.
9. The geophysical sensor cable section of clause 1 further comprising:
   a plurality of hydrophone groups contiguously defined along the geophysical sensor cable section;
   wherein the length of the outer jacket is about 75 meters;
   wherein each hydrophone group spans about 3 meters measured along the longitudinal axis of the outer jacket.
10. The geophysical sensor cable section of clause 1 further comprising:
   the substrate of flexible material resides within the internal volume;
   the substrate comprises a strip of flexible material that has a length and a width, and the length of the substrate extends parallel to the longitudinal axis.
11. The geophysical sensor cable section of clause 10 further comprising the substrate abuts an inside diameter of the outer jacket.
12. The geophysical sensor cable section of clause 10 further comprising the hydrophones periodically spaced along the length of the substrate, and the spacing at intervals being at least one selected from the group comprising: 50 centimeter (cm) intervals; 10 cm intervals; and 1 cm intervals.
13. The geophysical sensor cable section of clause 1 further comprising:
   the substrate of flexible material resides within the internal volume;
   the substrate is a strip of flexible material having a length, and the length of the substrate forms a helix around the longitudinal axis.
14. The geophysical sensor cable section of clause 13 further comprising the substrate abuts an inside diameter of the outer jacket.
15. The geophysical sensor cable section of clause 13 further comprising the hydrophones periodically spaced along the length of the substrate such that the hydrophones are spaced at intervals along the longitudinal axis being at least one selected from the group comprising: 50 centimeter (cm) intervals; 10 cm intervals; and 1 cm intervals.
16. The geophysical sensor cable section of clause 1 further comprising:
   the substrate of flexible material resides within the internal volume;
   the substrate defines a cylinder with a central axis, the central axis of the cylinder coaxial with the longitudinal axis of the outer jacket; and
   the plurality of hydrophones define a grid pattern on the cylinder.
17. The geophysical sensor cable section of clause 16 wherein the substrate abuts an inside diameter of the outer jacket.
18. The geophysical sensor cable section of clause 16 wherein the plurality of hydrophones are disposed at a location selected from the group consisting of: an outside surface of the cylinder; and an inside surface of the cylinder.
19. The geophysical sensor cable section of clause 16 further comprising the hydrophones define the grid pattern such that:
   the hydrophones are radially spaced around outer jacket, and at each axial location there are between 10 and 20 hydrophones inclusive; and
   the hydrophones are spaced at intervals along the longitudinal axis being at least one selected from the group comprising: 50 centimeter (cm) intervals; 10 cm intervals; and 1 cm intervals.
20. The geophysical sensor cable section of clause 1 further comprising:
   the substrate of flexible material is embedded within the outer jacket;
   the substrate comprises a strip of flexible material that has a length and a width, and the length of the substrate extends parallel to the longitudinal axis.
21. The geophysical sensor cable section of clause 20 wherein the substrate further comprises a plurality of strips of flexible material that extend parallel to each other.
22. The geophysical sensor cable section of clause 20 further comprising the hydrophones periodically spaced along the length of the substrate, and the spacing at intervals being at least one selected from the group comprising: 50 centimeter (cm) intervals; 10 cm intervals; and 1 cm intervals.
23. The geophysical sensor cable section of clause 1 further comprising:
   the substrate of flexible material is embedded within the outer jacket;
   the substrate is a strip of flexible material, and a length of the substrate forms a helix around the longitudinal axis.
24. The geophysical sensor cable section of clause 23 wherein the substrate further comprises a plurality of strips of flexible material in a double helix.
25. The geophysical sensor cable section of clause 23 further comprising the hydrophones periodically spaced along the length of the substrate such that the hydrophones are spaced at intervals along the longitudinal axis of the outer jacket, the intervals being at least one selected from the group comprising: 50 centimeter (cm) intervals; 10 cm intervals; and 1 cm intervals.
26. The geophysical sensor cable section of clause 1 further comprising:
   the substrate of flexible material is embedded within the outer jacket;
   the substrate defines a cylinder with a central axis, the central axis of the cylinder coaxial with the longitudinal axis of the outer jacket; and
   the plurality of hydrophones define a grid pattern on the cylinder.
27. The geophysical sensor cable section of clause 26 further comprising the hydrophones define the grid pattern such that:
   the hydrophones are radially spaced around outer jacket, and at each axial location there are between 10 and 20 hydrophones inclusive; and
   the hydrophones are spaced at intervals along the longitudinal axis being at least one selected from the group comprising: 50 centimeter (cm) intervals; 10 cm intervals; and 1 cm intervals; and at each axial location.
28. A method of manufacturing a geophysical sensor cable section comprising:
   creating a hydrophone group by:
   mechanically coupling a plurality hydrophones to a substrate of flexible material, the substrate of flexible material having electrical traces thereon; and
   electrically coupling the plurality of hydrophones to the electrical traces of the on the substrate of flexible material; and
   combining the hydrophone group with an outer jacket.
29. The method of clause 28 wherein creating the hydrophone group further comprises creating the hydrophone group having a density of one hydrophone per meter or greater, the density measured along a length of the substrate of flexible material.
30. The method of clause 28 wherein creating the hydrophone group further comprises creating the hydrophone group having a density of hydrophones along the substrate being at least one selected from a group consisting of: 10 hydrophones per meter or greater; and 100 hydrophones per meter or greater.
31. The method of clause 28 wherein creating the hydrophone group further comprises coupling the plurality of hydrophones, and each hydrophone has a largest dimension being at least one selected from the group comprising: 10 millimeters or less; and 5 millimeter or less.
32. The method of clause 28 further comprising filling the internal volume of the outer jacket with a gel.
33. The method of clause 28 wherein combining the hydrophone group with the outer jacket further comprises placing the substrate of flexible material within the internal volume such that a length of the substrate extends parallel to a longitudinal axis of the outer jacket.
34. The method of clause 33 wherein telescoping further comprising abutting the substrate against an inside diameter of the outer jacket.
35. The method of clause 28 wherein combining the hydrophone group with the outer jacket further comprises placing the substrate of flexible material in a helix around a longitudinal axis of the outer jacket.
36. The method of clause 35 wherein placing the substrate in a helix further comprises further comprises placing the substrate of flexible material in a helix around the longitudinal axis and abutting an inside diameter of the outer jacket.
37. The method of clause 28 wherein combining the hydrophone group with the outer jacket further comprises forming the substrate into a cylinder with a central axis, and disposing the cylinder in an internal volume of the outer jacket such that the central axis of the cylinder is coaxial with a longitudinal axis of the outer jacket.
38. The method of clause 37 disposing the cylinder in the internal volume further comprises placing the cylinder such that an outside diameter of the cylinder abuts an inside diameter of the outer jacket.
39. The method of clause 28 wherein combining the hydrophone group with the outer jacket further comprises embedding the substrate of flexible material in the outer jacket such that a length of the flexible material is parallel to the longitudinal axis.
40. The method of clause 28 wherein combining the hydrophone group with the outer jacket further comprises embedding the substrate of flexible material in the outer jacket such that the length of the substrate forms a helix around the longitudinal axis.
41. The method of clause 28 wherein combining the hydrophone group with the outer jacket further comprises embedding the substrate of flexible material into the outer jacket such that the substrate of flexible material forms a cylinder with a central axis, and the central axis of the cylinder coaxial with a longitudinal axis of the outer jacket.

## Claims

1. A geophysical sensor cable section comprising:
an outer jacket that defines an internal volume, a longitudinal axis, and a length;
a hydrophone group defined along the geophysical sensor cable section, the hydrophone group comprising:
a substrate of flexible material having electrical traces thereon; and
a plurality of hydrophones mechanically coupled to the substrate, each hydrophone comprising a die of an integrated circuit, and the electrical traces electrically coupling to the plurality of hydrophones.

2. The geophysical sensor cable section of claim 1 further comprising the plurality of hydrophones having a density of one hydrophone per meter or greater, the density measured along a length of the substrate measured parallel to the longitudinal axis, the density of the hydrophones preferably being at least one selected from a group consisting of: 10 hydrophones per meter or greater; and 100 hydrophones per meter or greater.

3. The geophysical sensor cable section of claim 1 or claim 2, wherein each hydrophone further comprises a plurality of hydrophone elements electrically coupled in parallel and/or wherein at least some of the plurality of hydrophones are electrically coupled in series.

4. The geophysical sensor cable section of any of the preceding claims, wherein the die of each hydrophone has a largest dimension being at least one selected from the group comprising: 10 millimeters or less; and 5 millimeter or less.

5. The geophysical sensor cable section of any of the preceding claims, further comprising a gel within the internal volume of the outer jacket.

6. The geophysical sensor cable section of any of the preceding claims, further comprising:
a plurality of hydrophone groups contiguously defined along the geophysical sensor cable section;
wherein the length of the outer jacket is about 75 meters;
wherein each hydrophone group spans about 3 meters measured along the longitudinal axis of the outer jacket.

7. The geophysical sensor cable section of any of the preceding claims, further comprising:
the substrate of flexible material resides within the internal volume;
the substrate comprises a strip of flexible material that has a length and a width, and the length of the substrate extends parallel to the longitudinal axis, or the length of the substrate forms a helix around the longitudinal axis.

8. The geophysical sensor cable section of any of claims 1 to 6, further comprising:
the substrate of flexible material is embedded within the outer jacket;
the substrate comprises a strip of flexible material that has a length and a width, and the length of the substrate extends parallel to the longitudinal axis, the substrate preferably further comprising a plurality of strips of flexible material that extend parallel to each other.

9. The geophysical sensor cable section of claim 7 or claim 8, further comprising the hydrophones periodically spaced along the length of the substrate, and the spacing at intervals being at least one selected from the group comprising: 50 centimeter (cm) intervals; 10 cm intervals; and 1 cm intervals.

10. The geophysical sensor cable section of any of claims 1 to 6, further comprising:
the substrate of flexible material resides within the internal volume;
the substrate defines a cylinder with a central axis, the central axis of the cylinder coaxial with the longitudinal axis of the outer jacket; and
the plurality of hydrophones define a grid pattern on the cylinder, and wherein the plurality of hydrophones are preferably disposed at a location selected from the group consisting of: an outside surface of the cylinder; and an inside surface of the cylinder.

11. The geophysical sensor cable section of claim 10 further comprising the hydrophones define the grid pattern such that:
the hydrophones are radially spaced around outer jacket, and at each axial location there are between 10 and 20 hydrophones inclusive; and
the hydrophones are spaced at intervals along the longitudinal axis being at least one selected from the group comprising: 50 centimeter (cm) intervals; 10 cm intervals; and 1 cm intervals.

12. The geophysical sensor cable section of any of claims 7 to 11, wherein the substrate abuts an inside diameter of the outer jacket.

13. The geophysical sensor cable section of any of claims 1 to 6, further comprising:
the substrate of flexible material is embedded within the outer jacket;
the substrate is a strip of flexible material, and a length of the substrate forms a helix around the longitudinal axis, wherein the substrate preferably further comprises a plurality of strips of flexible material in a double helix.

14. The geophysical sensor cable section of claim 7 or claim 13, further comprising the hydrophones periodically spaced along the length of the substrate such that the hydrophones are spaced at intervals along the longitudinal axis of the outer jacket, the intervals being at least one selected from the group comprising: 50 centimeter (cm) intervals; 10 cm intervals; and 1 cm intervals.

15. The geophysical sensor cable section of any of claims 1 to 6, further comprising:
the substrate of flexible material is embedded within the outer jacket;
the substrate defines a cylinder with a central axis, the central axis of the cylinder coaxial with the longitudinal axis of the outer jacket; and
the plurality of hydrophones define a grid pattern on the cylinder, and wherein the hydrophones preferably define the grid pattern such that:
the hydrophones are radially spaced around outer jacket, and at each axial location there are between 10 and 20 hydrophones inclusive; and
the hydrophones are spaced at intervals along the longitudinal axis being at least one selected from the group comprising: 50 centimeter (cm) intervals; 10 cm intervals; and 1 cm intervals; and at each axial location.

16. A method of manufacturing a geophysical sensor cable section comprising:
creating a hydrophone group by:
mechanically coupling a plurality hydrophones to a substrate of flexible material, the substrate of flexible material having electrical traces thereon; and
electrically coupling the plurality of hydrophones to the electrical traces of the on the substrate of flexible material; and
combining the hydrophone group with an outer jacket.

17. The method of claim 16 wherein creating the hydrophone group further comprises creating the hydrophone group having a density of one hydrophone per meter or greater, the density measured along a length of the substrate of flexible material, or in which the density of hydrophones along the substrate is at least one selected from a group consisting of: 10 hydrophones per meter or greater; and 100 hydrophones per meter or greater.

18. The method of claim 16 or claim 17, wherein creating the hydrophone group further comprises coupling the plurality of hydrophones, and each hydrophone has a largest dimension being at least one selected from the group comprising: 10 millimeters or less; and 5 millimeter or less.

19. The method of any of claims 16 to 18, further comprising filling the internal volume of the outer jacket with a gel.

20. The method of any of claims 16 to 19, wherein combining the hydrophone group with the outer jacket further comprises placing the substrate of flexible material within the internal volume such that a length of the substrate extends parallel to a longitudinal axis of the outer jacket, wherein telescoping preferably further comprises abutting the substrate against an inside diameter of the outer jacket.

21. The method of any of claims 16 to 19, wherein combining the hydrophone group with the outer jacket further comprises placing the substrate of flexible material in a helix around a longitudinal axis of the outer jacket, wherein placing the substrate in a helix preferably further comprises further comprises placing the substrate of flexible material in a helix around the longitudinal axis and abutting an inside diameter of the outer jacket.

22. The method of any of claims 16 to 19, wherein combining the hydrophone group with the outer jacket further comprises forming the substrate into a cylinder with a central axis, and disposing the cylinder in an internal volume of the outer jacket such that the central axis of the cylinder is coaxial with a longitudinal axis of the outer jacket, wherein disposing the cylinder in the internal volume preferably further comprises placing the cylinder such that an outside diameter of the cylinder abuts an inside diameter of the outer jacket.

23. The method of any of claims 16 to 19, wherein combining the hydrophone group with the outer jacket further comprises:
a) embedding the substrate of flexible material in the outer jacket such that a length of the flexible material is parallel to the longitudinal axis, or
b) embedding the substrate of flexible material in the outer jacket such that the length of the substrate forms a helix around the longitudinal axis, or
c) embedding the substrate of flexible material into the outer jacket such that the substrate of flexible material forms a cylinder with a central axis, and the central axis of the cylinder coaxial with a longitudinal axis of the outer jacket.
